# EUROPEAN PATENT APPLICATION

(11) **EP 4 733 743 A1**
(43) Date of publication of application: **29.04.2026**
(21) Application number: 24826119.0
(22) Date of filing: 22.05.2024
(51) Int. Cl.: G01N 21/17, G01N 21/47, G01N 21/88, G01N 25/72

(54) **METHOD AND APPARATUS FOR MEASURING UNIFORMITY OF TARGET MEDIUM**

(30) Priority: 23.06.2023 KR 20230081356
(71) Applicant: Korea Electrotechnology Research Institute, Changwon-si, Gyeongsangnam-do 51543 (KR)
(72) Inventor: KIM, Jong Jin, Changwon-si Gyeongsangnam-do 51543 (KR); HA, Yoon Cheol, Changwon-si Gyeongsangnam-do 51543 (KR)
(74) Representative: Cabinet Beau de Loménie
(86) International application number: PCT/KR2024/006172
(87) International publication number: WO 2024/262797

(57) **Abstract**

An apparatus for measuring uniformity of a target medium includes a photothermal irradiator configured to irradiate a target medium with at least two types of irradiation light having different peak wavelengths, the irradiation light including a first irradiation light having a first peak wavelength and a first period, and a second irradiation light having a second peak wavelength and a second period; and a speckle analyzer configured to obtain a speckle image - the speckle image including a first region varying in response to the first period, a second region varying in response to the second period, and a third region with relatively little variation - from the target medium irradiated with the irradiation light and to determine uniformity of the target medium based on the obtained speckle image.

## Description

### [Technical Field]

The present disclosure relates to a method and apparatus for measuring uniformity of a target medium.

### [Background Art]

In order for a producer to confirm that a target medium has desirable uniformity, uniformity of thermal conduction is measured using a thermal imaging camera, for example, an infrared camera. Temperature variations on the surface of the target medium measured by the infrared camera indicate non-uniform regions of the target medium. However, in this case, it is difficult to realize high resolution and to achieve temperature measurement of several micro-degrees.

### [Patent Document]

Korean Patent Laid-open Publication No. 10-2023-0060229
Korean Patent Registration No. 10-2528000
Korean Patent Registration No. 10-2498594
Korean Patent Registration No. 10-2016740

### [Non-Patent Literature]

Laser speckle photometry - Optical sensor systems for condition and process monitoring (Lili Chen et al., SUBSTANCES TESTING FOR JOINING AND ADDITIVE MANUFACTURING APPLICATIONS., 213).

### [Disclosure]

### [Technical Problem]

Embodiments of the present disclosure provide a method and apparatus for measuring uniformity of a target medium, which provides higher measurement sensitivity than a thermal imaging camera and enables implementation of high-resolution images at low cost.

### [Technical Solution]

In accordance with one aspect of the present disclosure, an apparatus for measuring uniformity of a target medium includes: a photothermal irradiator configured to irradiate a target medium with at least two types of irradiation light having different peak wavelengths, the irradiation light including a first irradiation light having a first peak wavelength and a first period, and a second irradiation light having a second peak wavelength and a second period; and a speckle analyzer configured to obtain a speckle image - the speckle image including a first region varying in response to the first period, a second region varying in response to the second period, and a third region with relatively little variation - from the target medium irradiated with the irradiation light and to determine uniformity of the target medium based on the obtained speckle image.

In one embodiment, the photothermal irradiator may be configured to simultaneously irradiate the target medium with the first irradiation light and the second irradiation light for at least a preset duration.

In one embodiment, the photothermal irradiator may be configured to sequentially irradiate the target medium with the first irradiation light and the second irradiation light for at least a preset duration.

In one embodiment, the photothermal irradiator may be configured to irradiate the same region of the target medium with the first irradiation light and the second irradiation light.

In one embodiment, the first period may be different from the second period.

In one embodiment, the photothermal irradiator may further include a memory configured to store peak wavelengths and periods of irradiation light to be emitted to the target medium, and substance information corresponding to the irradiation light.

In one embodiment, the speckle analyzer may further include a memory configured to store peak wavelengths and periods of irradiation light reaching the target medium, and substance information corresponding to the irradiation light.

In one embodiment, the speckle analyzer may be configured to obtain the number and/or the size of each of the first, second, and third regions, and to determine uniformity of the target medium based on the number and/or the size.

In accordance with another aspect of the present disclosure, a method for measuring uniformity of a target medium includes: irradiating, by a photothermal irradiator, a target medium with at least two types of irradiation light having different peak wavelengths, the irradiation light including a first irradiation light having a first peak wavelength and a first period, and a second irradiation light having a second peak wavelength and a second period; obtaining, by a speckle analyzer, a speckle image from the target medium irradiated with the irradiation light, the speckle image including a first region varying in response to the first period, a second region varying in response to the second period, and a third region with little variation; and determining, based on the obtained speckle image, uniformity of a substance corresponding to the third region.

In one embodiment, the step of irradiating the target medium with the at least two types of irradiation light having different peak wavelengths may include simultaneously irradiating the target medium with the first irradiation light and the second irradiation light for at least a preset duration.

In one embodiment, the step of irradiating the target medium with the at least two types of irradiation light having different peak wavelengths may include sequentially irradiating the target medium with the first irradiation light and the second irradiation light for at least a preset duration.

In one embodiment, the step of irradiating the target medium with the at least two types of irradiation light having different peak wavelengths may include irradiating the same region of the target medium with the first irradiation light and the second irradiation light.

In one embodiment, the first period may be different from the second period.

In one embodiment, the step of irradiating the target medium with the at least two types of irradiation light having different peak wavelengths may include reading, from a memory of the photothermal irradiator, peak wavelengths and periods of irradiation light to be emitted to the target medium, and substance information corresponding to the irradiation light.

In one embodiment, the step of determining uniformity of the substance corresponding to the third region based on the obtained speckle image may include reading, from a memory of the speckle analyzer, peak wavelengths and periods of irradiation light reaching the target medium, and substance information corresponding to the irradiation light.

In one embodiment, the step of determining uniformity of the substance corresponding to the third region based on the obtained speckle image may include: obtaining the number and/or the size of each of the first, second, and third regions; and determining uniformity of the target medium based on the number and/or the size.

In accordance with a further aspect of the present disclosure, an apparatus for measuring uniformity of a target medium includes: a photothermal irradiator including a first light source configured to irradiate a target medium with irradiation light of a first peak wavelength at a first period, and a memory configured to store information about the target medium, information about the irradiation light emitted to the target medium, and substance information corresponding to the irradiation light; and a speckle analyzer including a sensor configured to obtain a speckle image from the target medium irradiated with the irradiation light, the speckle image including a first region varying in response to the first period and a second region excluding the first region; a memory configured to store information about the target medium, information about irradiation light reaching the target medium, and substance information corresponding to the irradiation light; and a processor configured to determine uniformity of the target medium based on the first region, the information about the target medium, the information about the irradiation light, and the substance information corresponding to the irradiation light.

In accordance with yet another aspect of the present disclosure, an apparatus for measuring uniformity of a target medium includes: a photothermal irradiator configured to irradiate a target medium with a first irradiation light having a first peak wavelength and a first period, the target medium including a first substance and a second substance having different physical properties; and a speckle analyzer configured to obtain a speckle image from the target medium irradiated with the irradiation beam, to analyze the obtained image, and to provide a regionally mapped representation of the substances contained in the target medium by regionally mapping non-uniformity of thermal equilibrium on the target medium irradiated with the first irradiation light due to different properties of the first substance and the second substance.

In accordance with yet another aspect of the present disclosure, a method for measuring uniformity of a target medium includes: irradiating, by a photothermal irradiator, a target medium with a first irradiation light having a first peak wavelength and a first period for a preset duration, the target medium including a first substance and a second substance having different physical properties; terminating irradiation with the first irradiation light; obtaining a plurality of successive speckle images from the target medium irradiated with the irradiation beam after terminating irradiation with the first irradiation light; and analyzing the plurality of obtained successive speckle images to generate an image having a regionally mapped representation of the substances contained in the target medium by regionally mapping non-uniformity of thermal equilibrium on the target medium irradiated with the first irradiation light due to different properties of the first substance and the second substance.

### [Advantageous Effects]

Embodiments of the present disclosure provide an apparatus and method for measuring uniformity of a target medium, in which uniformity of the target medium can be measured based on images of speckles generated in response to irradiation of the target medium with modulated irradiation light. More specifically, the apparatus and method for measuring uniformity of a target medium can determine the locations and types of impurities contained in the target medium.

### [Description of Drawings]

FIG. 1 is a conceptual view of an apparatus for measuring uniformity of a target medium according to one embodiment of the present disclosure.
FIG. 2 is a block diagram of a photothermal irradiator of the apparatus for measuring uniformity of a target medium according to the embodiment of the present disclosure.
FIG. 3 is a block diagram of a speckle analyzer of the apparatus for measuring uniformity of a target medium according to the embodiment of the present disclosure.
FIG. 4A to FIG. 4C are views showing examples of wavelengths of light emitted from the photothermal irradiator according to the embodiment of the present disclosure.
FIG. 5 and FIG. 6 are conceptual views of speckle images according to one embodiment of the present disclosure.

### [Best Mode]

Hereinafter, embodiments of the present disclosure will be described in detail with reference to the accompanying drawings such that the present disclosure can be easily implemented by those skilled in the art. It should be understood that the present disclosure may be embodied in different ways and is not limited to the following embodiments.

In the drawings, portions irrelevant to the description will be omitted for clarity. Like components will be denoted by like reference numerals throughout the specification.

As used herein, the terms "includes", "comprises", "including" and/or "comprising" specify the presence of stated features, steps, operations, elements, and/or components, but do not preclude the presence or addition of one or more other features, steps, operations, elements, components, and/or groups.

It will be understood that the embodiments disclosed herein are not intended to be limited to any particular embodiment, and includes various modifications, equivalents, and/or alternatives to the embodiments of this disclosure.

As used herein, the expression "configured to" may be used interchangeably with, for example, "suitable for", "having the capacity to", "designed to", "adapted to", "made to", or "capable of" depending on the context. The expression "configured (or set up) to" may not necessarily mean "specifically designed to" in a hardware sense. Instead, in a certain context, the expression "a device configured to" may mean that the device is "capable of" doing something in conjunction with other devices or components.

It will be understood that the related literature described in this disclosure is incorporated herein by reference in its entirety and that a person having ordinary skill in the art will be able to apply what is described in the related literature to the matters briefly described herein.

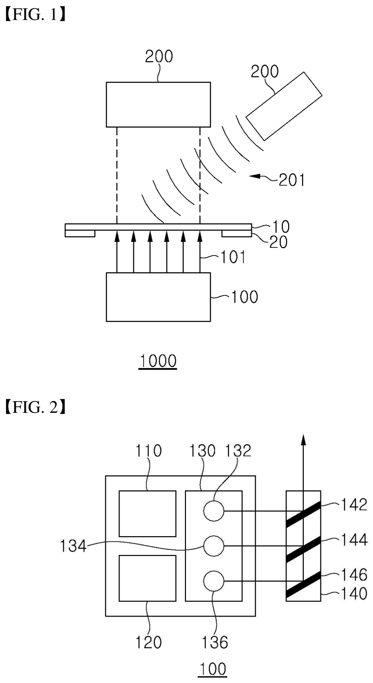

FIG. 1 is a conceptual view of a uniformity measurement apparatus 1000 for measuring uniformity of a target medium according to one embodiment of the present disclosure.

Referring to FIG. 1, a target medium 10 is supported by a support 20 and uniformity of the target medium 10 is measured by the uniformity measurement apparatus 1000. The target medium 10 may not be part of the uniformity measurement apparatus 1000, but may be an object to be measured thereby. In one embodiment, the uniformity measurement apparatus 1000 may include a photothermal irradiator 100 and a speckle analyzer 200.

The photothermal irradiator 100 may be configured to irradiate the target medium 10 with at least one type of irradiation light 101. The photothermal irradiator 100 may be configured to emit multi-wavelength irradiation light 101 with different wavelengths and may be configured to output the multi-wavelength irradiation light 101 simultaneously or in a time-shifted manner, for example, in the range of the UV band to the visible band. In one embodiment, the photothermal irradiator 100 may include at least one LED light source. The irradiation light 101 emitted from the photothermal irradiator 100 may be photothermal irradiation light. The irradiation light 101 of the photothermal irradiator 100 may be modulated to a preset frequency (i.e., a preset period) or to a frequency (i.e., a preset period) selected by a user. The technique of irradiating light through frequency modulation is widely known in the art and will not be described in detail. The target medium 10 may absorb the irradiation light 101 emitted from the photothermal irradiator 100. Due to absorption of the irradiation light 101, thermal change can occur on the surface of the target medium 10.

In one embodiment, different substances contained in or constituting the target medium 10 may have different physical properties. That is, different substances may have different specific heat, heat absorption rates, thermal conductivities, and the like. Accordingly, different substances can exhibit different degrees of reactivity with respect to the irradiation light 101. For example, the different substances contained in or constituting the target medium 10 may absorb the irradiation light 101 in different wavelength bands, causing different thermal changes on the surface thereof depending on the substance contained in the target medium 10. In one embodiment, when multiple types of irradiation light 101 are output from the photothermal irradiator 100, each type of irradiation light 101 may have a different wavelength.

The speckle analyzer 200 may be configured to emit a probe beam 201 (for example, laser light) toward the target medium 10 and to obtain and analyze an image of the surface of the target medium 10 irradiated with the probe beam 201. The probe beam 201 may include, for example, laser light. The probe beam 201 emitted from the speckle analyzer 200 is set to obtain a speckle image of a scattering change of the probe beam 201 depending on temperature change on the surface of the target medium 10. In response to different thermal changes in at least one region on the surface of the target medium 10 due to the irradiation light 101, the obtained speckle image may also vary in real time. That is, when the speckle image is obtained, a region in which the irradiation light 101 is relatively more absorbed can be distinguished from another region.

In one embodiment, the wavelength bands of light absorbed by a main component or impurities of the target medium 10 are different. Thus, light in the wavelength bands absorbed by the main component or impurities may be used as the irradiation light 101.

In one embodiment, the photothermal irradiator 100 is used to continuously emit the irradiation light 101 in a light absorption band of the main component of the target medium 10, and spatiotemporal signals of dynamic speckle images obtained through the speckle analyzer 200 are analyzed. In this way, it is possible to observe a regional distribution of other substances different from the main component of the target medium by regionally mapping non-uniformity of thermal equilibrium.

That is, the photothermal irradiator 100 is used to continuously emit the irradiation light 101 in the light absorption band of the main component of the target medium 10. Since the main component and impurities (for example, components other than the main component) of the target medium 10 have different absorption rates with respect to the irradiation light 101, different speckle images will be obtained through the speckle analyzer 200. In addition, the photothermal irradiator 100 may be used to emit the irradiation light 101 in the light absorption band of the main component of the target medium 10 for a preset duration and then a speckle image of the target medium 10 may be obtained after stopping irradiation with the irradiation light 101. Since the main component and the components other than the main component have different physical properties, such as heat emission rate, thermal conductivity, and the like, heat transfer from the irradiation light 101 that has already been absorbed is different for each component, even if irradiation with the irradiation light 101 is stopped, and the spectral patterns of the main component and the components other than the main component are obtained differently in the spectral images obtained after irradiation with the irradiation light 101 is stopped. Accordingly, it is possible to analyze the components of the target medium 10 by obtaining and analyzing the speckle images of the target medium 10 after stopping irradiation with the irradiation light 101. Furthermore, in this way, it is possible to observe a regional distribution of the other substances different from the main component of the target medium 10 by regionally mapping non-uniformity of thermal equilibrium.

In one embodiment, a cathode substance of a lithium secondary battery is used as the target medium 10. A main component of an active substance of the cathode of the lithium secondary battery is lithium. Accordingly, the speckle images of the target medium 10 are obtained by irradiating the target medium 10 with light that is well absorbed by lithium. In the images obtained in time series, impurities and the cathode substances will have different speckle patterns.

FIG. 2 is a block diagram of the photothermal irradiator 100 of the apparatus for measuring uniformity of a target medium according to the embodiment of the present disclosure.

Referring to FIG. 2, the photothermal irradiator 100 includes a processor 110, a memory 120, and a light source unit 130. The processor 110 is configured to control the photothermal irradiator 100 when instructions stored in the memory 120 are executed. The processor 110 may be implemented by application specific integrated circuits (ASICs), digital signal processors (DSPs), digital signal processing devices (DSPDs), programmable logic devices (PLDs), field programmable gate arrays (FPGAs), controllers, microcontrollers, microprocessors, and any other form of processor or controller for performing such functions.

The processor 110 is configured to control the light source unit 130 to select a wavelength of light output from the light source unit 130 and to set the frequency of the selected light. For example, the processor 110 may modulate/control the number of types of irradiation light to be output from the light source unit 130 and the frequency of each type of irradiation light. In one embodiment, the processor 110 may also control the light source unit 130 to output irradiation light according to a recipe previously stored in the memory 120. In one embodiment, the processor 110 may control the light source unit 130 to output irradiation light based on instructions from a user.

The memory 120 may store instructions for controlling the photothermal irradiator 100 and recipes for analyzing the target medium 10. For example, the recipe may include information included in Table 1.

**Table 1**

| Number | Reactant | Peak wavelength | Frequency (period) |
|---|---|---|---|
| 1 | Iron impurity | 400 nm | 3 Hz |
| 2 | Lithium | 250 nm | 5 Hz |
| 3 | Sulfide | 900 nm | 7 Hz |

In one embodiment, the wavelengths in Table 1 refer to peak wavelengths and the irradiation light may have a preset range of wavelengths including the peak wavelengths. For example, light having a first wavelength may be in the wavelength band of 300 nm to 500 nm, light having a second wavelength may be in the wavelength band of 150 nm to 350 nm, and light having a third wavelength may be in the wavelength band of 800 nm to 1,000 nm. It will be understood that the reactants, wavelengths, and frequencies can be varied. In one embodiment, the recipe may include data for determining the number of types of irradiation light to be used, irradiation time, and the like depending on the target medium 10.

In one embodiment, the memory 120 may store different recipes for different types of target media 10. That is, the memory 120 may store recipes matched to the target medium 10. Depending on the type of target medium 10, the type of impurities to be determined may be varied and thus the wavelength band of the irradiation light 101 may also be varied. Depending on the type of target medium 10, the processor 110 may read a suitable recipe from the memory 120 and may determine the irradiation light 101 based on the recipe.

In one embodiment, the light source unit 130 may include first, second and third light sources 132, 134, 136. It will be understood that the number of light sources in the light source unit 130 may be less than three or greater than three, unlike those shown in FIG. 2. In one embodiment, the first, second and third light sources 132, 134, 136 emit light having first, second and third peak wavelengths, respectively; and the first, second, and third peak wavelengths may be different from each other. The first, second and third light sources 132, 134, 136 may include, for example, LED light sources. In one embodiment, the first to third light sources 132, 134, 136 may be controlled to emit light sequentially. In one embodiment, at least two of the first to third light sources 132, 134, 136 may be controlled to emit light simultaneously.

The photothermal irradiator 100 may further include an optical unit 140. The optical unit 140 may include first, second and third optical members 142, 144, 146. The optical unit 140 may be configured to focus incoming light into a single optical path such that the light reaches the target medium 10. For example, the optical unit may include a collimator, optical fibers, and the like. In one embodiment, each of the first, second and third optical members 142, 144, 146 may include an optical element (for example, a lens, a mirror, and the like) that modifies the optical path. By the optical unit 140, light emitted from a plurality of light sources, for example, the first to third light sources 132, 134, 136, may be guided to reach the same location on the target medium 10.

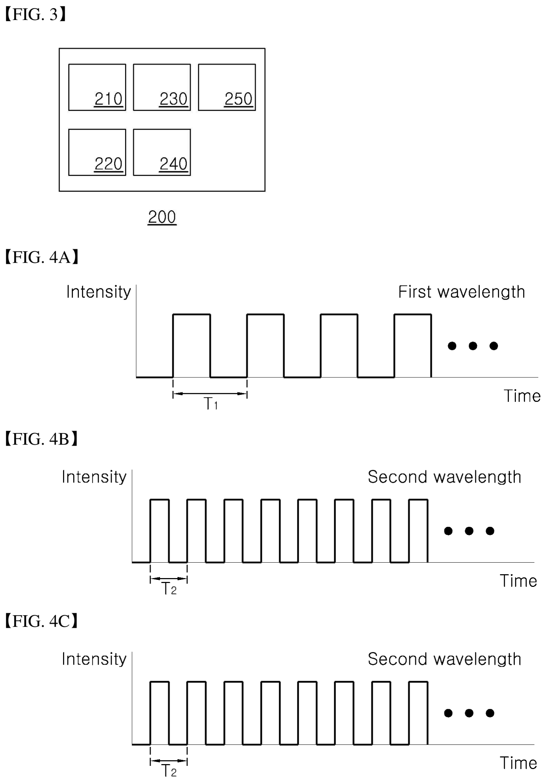

FIG. 3 is a block diagram of the speckle analyzer 200 of the apparatus for measuring uniformity of a target medium according to the embodiment of the present disclosure. Referring to FIG. 3, the speckle analyzer 200 includes a processor 210, a memory 220, a light irradiator 230, a sensor 240, and a display 250.

The processor 210 is configured to control the speckle analyzer 200. For example, the processor 210 may be configured to perform operation of each of elements - the light irradiator 230, the sensor 240, and the display 250 - when instructions stored in the memory 220 are executed by the processor 210. The memory 220 is configured to store instructions and data for interpretation of image data received by the sensor 240. For example, the memory 220 may store data for analyzing the target medium 10. In addition, the memory 220 may store data of the recipes stored in the memory 120 of the photothermal irradiator 100. For example, the memory 220 may store information regarding light emitted from the photothermal irradiator 100 towards the target medium 10 (for example, at least one of wavelength, frequency (period), and reactants). In one embodiment, information regarding the light emitted from the photothermal irradiator 100 may be transmitted to the speckle analyzer 200, and the memory 220 may receive the information of the light emitted from the photothermal irradiator 100.

In one embodiment, the light irradiator 230 may be configured to generate a speckle image from the surface of the target medium 10 by emitting the probe beam 201 toward the target medium 10. The probe beam 201 may include, for example, laser light. The wavelength of the probe beam 201 may be different from the wavelength of the irradiation light 101 emitted from the photothermal irradiator 100.

In one embodiment, the sensor 240 is configured to detect the speckle image generated from the surface of the target medium 10. The sensor 240 may include an array of light sensors or a single image sensor. The sensor 240 may include a camera, for example, a CCD camera.

The display 250 may be configured to visually provide the speckle images to a user. The display 250 may provide the speckle image, which varies due to variation of an absorption site depending on the wavelength of the irradiation light 101 emitted from the photothermal irradiator 100, to the user in real time. Accordingly, the speckle images may be provided like a video.

In one embodiment, the speckle analyzer 200 may include a rolling shutter type camera. When the target medium 10 moves at a high speed, it is possible to obtain line-by-line images by a rolling shutter method. The obtained line-by-line images may be reconstructed to observe a thermoelectric uniformity distribution of the high-speed target medium.

FIG. 4A to FIG. 4C show examples of light beams 101 emitted from the photothermal irradiator 100 according to the embodiment of the present disclosure. The peak wavelengths of FIG. 4A to FIG. 4C may correspond to light sources indicated by numbers 1, 2, and 3, respectively, listed in Table 1. In one embodiment, a first peak wavelength may correspond to a peak wavelength of the first light source 132, a second peak wavelength may correspond to a peak wavelength of the second light source 134, and a third peak wavelength may correspond to a peak wavelength of the third light source 136. Although the wavelengths shown in FIG. 4A to FIG. 4C are shown as pulse waves, it will be understood that the shape of the pulse waves may be suitably modified. Although a first period T₁, a second period T₂, and a third period T₃ are shown as different from each other in FIG. 4A to FIG. 4C, at least two of the first period T1, the second period T2, and the third period T3 may be identical. For example, when light having the first peak wavelength, light having the second peak wavelength, and light having the third peak wavelength sequentially reach the target medium, the first period T₁, the second period T₂, and the third period T₃ may be identical. It will be understood that the first period T₁, the second period T₂, and the third period T₃ may be modulated.

As shown in FIG. 4A to FIG. 4C, light having the first peak wavelength may be emitted at the first period T₁ (i.e., first frequency), light having the second peak wavelength may be emitted at the second period T₂ (i.e., second frequency), and light having the third peak wavelength may be emitted at the third period T₃ (i.e., third frequency). The first period T₁, the second period T₂, and the third period T₃ may be different from one another. In one embodiment, the light of the first wavelength, the light of the second wavelength, and the light of the third wavelength may be emitted to the target medium 10 simultaneously or sequentially, or at least two types of the light having the first to third wavelengths may be emitted thereto simultaneously or sequentially. The light of the first wavelength, the light of the second wavelength, and the light of the third peak wavelength may be emitted to the same location or different locations. Various substances in the target medium 10 may have different absorption rates with respect to the light of the first wavelength, the light of the second wavelength, and the light of the third wavelength. For example, when the target medium 10 includes first to fourth substances, the first, second, and third substances may exhibit peak absorption of light at the first, second, and third wavelengths, respectively. Therefore, the first substance may have a temperature increased by the light of the first wavelength, the second substance may have a temperature increased by the light of the second wavelength, and the third substance may have a temperature changed by the light of the third wavelength. The change in temperature may affect the speckle image. Accordingly, when the target medium 10 including the first, second, third and fourth substances is irradiated with at least one type of the light having the first, second and third wavelengths and the speckle image of the target medium 10 is obtained using the speckle analyzer 200, each of regions including the first, second and third substances irradiated with the light of the first, second and third wavelengths may allow change in the speckle image.

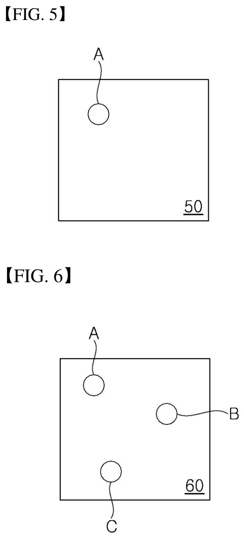

FIG. 5 and FIG. 6 are conceptual views of speckle images according to one embodiment of the present disclosure.

Referring to FIG. 5, an example of a region 50 on a target medium 10 irradiated with irradiation light 101 emitted from the photothermal irradiator 10 is shown. In one embodiment, the region 50 may be a speckle image obtained over a period of time. In one embodiment, it is assumed that the region 50 is irradiated with light of the first wavelength at a first period T₁ for a predetermined duration, as shown in FIG. 4A. In the region 50, a circled region A is a region containing a substance that absorbs more light at the first wavelength (for example, a first substance), and a region other than the region A may include a substance that absorbs less light at the first wavelength. Since the absorption rate with respect to light at the first wavelength in the region A is relatively large, the region A will allow a greater temperature change than the region other than the region A when irradiated with the light of the first wavelength, and, accordingly, the spectral image of the region A will be different from the region other than the region A. In addition, upon no irradiation with the light of the first wavelength, the region A and the region other than the region A will have the same spectral image. Thus, when the target medium 10 is irradiated with the light of the first wavelength at the first period T₁, the speckle image of the region A will vary relatively significantly depending on a section irradiated with the light of the first wavelength and a section not irradiated with the light of the first wavelength, whereas the speckle image of the region other than the region A will vary relatively little. In one embodiment, in the spectral image of the region 50, the region A irradiated with the light of the first wavelength may vary at a first period T₁. In the embodiment, for the sake of understanding, it can be expressed that the speckle image of the region A varies, whereas the speckle image of the region other than the region A does not vary. Accordingly, it is possible to detect the substance contained in the region A. In one embodiment, in the region 50 of the target medium 10, the region A may be defined as a region containing a relatively higher amount of the substance different from substances contained in the region other than the region A, that is, as an impurity-containing region.

Referring now to FIG. 6, an example of a region 60 of the target medium 10 irradiated with irradiation light 101 of the photothermal irradiator 10, which is different from the irradiation light of FIG. 5, is shown. In one embodiment, the region 60 may be a speckle image obtained over a period of time. In one embodiment, it is assumed that the region 60 is irradiated with light of the first to third wavelengths, as shown in FIG. 4A to FIG. 4C, for a predetermined duration. In the region 60, a circled region A is a region containing a substance (for example, first substance) that absorbs more light at the first wavelength, a region B is a region containing a substance (for example, second substance) that absorbs more light at the second wavelength, a region C is a region containing a substance (for example, third substance) that absorbs more light at the third wavelength, and a region other than the regions A, B, and C may contain a substance that absorbs less light at the first, second and third wavelengths. In one embodiment, in the speckle image of the region 60, the region A irradiated with light of the first wavelength may vary at the first period T₁, the region B irradiated with light of the second wavelength may vary at the second period T₂, and the region C irradiated with light of the third wavelength may vary at the third period T₃. Accordingly, it is possible to detect the substance contained in each of the regions A, B, and C.

Referring again to FIG. 3, the memory 220 may be configured to store data, methods, and instructions for analyzing the speckle image. The memory 220 may be configured to store information about the irradiation light 101 emitted to the target medium 10, information about a substance whose speckle image varies depending on the irradiation light 101, and the like. In one embodiment, the information stored in the memory 220 may be input by a user and/or received from the photothermal irradiator 100.

In one embodiment, the processor 210 may be configured to determine a substance contained in the target medium 10 as an impurity based on the information stored in the memory 220 and the speckle image obtained by the sensor 240. For example, the processor 210 may extract an intensity fluctuation value at each pixel of the obtained speckle image, which may be analyzed via the Fourier transform in the frequency domain. Then, a normalized magnitude value obtained after performing the above process for each pixel in the 2D image is mapped 1:1 to the corresponding pixel position to finally realize a photothermal modulation-laser speckle pattern image. Furthermore, the intensity of spatiotemporal variation of the laser speckle may be analyzed using a correlation algorithm, and the analysis result may be used to map a spatial distribution of thermoelectric uniformity. Accordingly, the processor 210 may obtain, from the obtained speckle image, a region with high variation within the speckle image, as shown in FIG. 5 and FIG. 6. It will be understood that, since the light beams of the first, second and third wavelengths are emitted at inherent periods, distinction between the regions A, B, and C is possible even if the light beams of the first, second and third wavelengths are emitted simultaneously.

More specifically, the processor 210 may obtain the number and/or the sizes of regions with high variation within the speckle image corresponding to the wavelength of the irradiation light. By way of example, referring to FIG. 6, the processor 210 may determine the number of regions A, B, and C in FIG. 6 and the size of each region. The processor 210 may determine the kind of impurity in the target medium 10 and whether the target medium 10 is defective based on the number and/or the size of the regions with high variation corresponding to the wavelength of the irradiation light within the speckle image. In one embodiment, impurities up to 10 microns in size may be discriminated through utilization of a large area imaging sensor.

By way of example, referring to FIG. 6, the processor 210 may determine that an impurity is present in the target medium 10 (or that the target medium 10 is defective) in response to determining that the number of each of the regions A, B, and C is greater than a preset number. In addition, the processor 210 may determine that an impurity is present in the target medium 10 (or that the target medium 10 is defective) in response to determining that the size of each of the regions A, B, and C is greater than a preset size. For example, the processor 210 may determine that the first substance is present as an impurity in response to determining that the number of regions A is greater than any one of 2, 3, 4, and 5. In response to determining that the size of the region B is greater than or equal to a preset ratio (for example, 0.1%, 0.2%, 0.3%, 0.5%, 1%, 2%, 3%, 4%, 5%, and the like) relative to the size of the region 60, the processor 210 may determine that the second substance is present as an impurity. The preset number and/or the preset ratio may be stored in the memory 220 or may be set by a user.

In one embodiment, the speckle image may be provided to a user through the display 250. The user may be provided with a visual representation of an impurity-containing region through the speckle image. The display 250 may be configured to provide the user with the speckle image, an indication of the impurity-containing region, and information regarding impurities contained in the region. That is, the processor 210 may allow the display 250 to display the number and/or the size of the region of high variation corresponding to the wavelength of the irradiation light.

In one embodiment, the target medium 10 may be provided in the form of a thin sheet, such as a cathode plate, an anode plate, and a separator that constitute a lithium secondary battery, or may include a cathode plate, an anode plate, and a solid electrolyte sheet that constitute an all-solid-state battery. For example, the target medium 10 may include a cathode plate for a commercial lithium secondary battery, in which a uniform mixture of a cathode active substance (generally a lithium metal oxide or lithium metal phosphate powder having a size of dozens of micrometers or less), a coating substance (generally carbon powder), and a binder (generally a polymer material, such as PVDF) is coated on aluminum foil provided as a cathode collector. Such a cathode plate may contain impurities of metal particles having a size of several to hundreds of micrometers, which have different thermal conductivity than the above substances. Therefore, when light in a wavelength band that is absorbed by the metal particles and not absorbed by the cathode plate is used as irradiation light, it is possible to obtain an image in which variation of a speckle image obtained from the impurities is greater than variation of a speckle image obtained from the cathode plate. Alternatively, when light in a wavelength band that is not absorbed by the metal particles but is absorbed by the cathode plate is used for irradiation, it is possible to obtain an image in which the speckle variation is larger on the cathode plate than on the impurities.

The methods according to the present disclosure may be implemented as code that can be written on a processor-readable recording medium and thus read by a processor of a server, system, equipment, computer, or integrated control unit which is used by a certain entity. The processor-readable recording medium may be any type of recording device in which data is stored in a processor-readable manner. The processor-readable recording medium may include, for example, ROM, RAM, CD-ROM, a magnetic tape, a floppy disk, and an optical data storage device, and may be implemented in the form of a carrier wave transmitted over the Internet. In addition, the processor-readable recording medium may be distributed over a plurality of computer systems connected to a network such that processor-readable code is written thereto and executed therefrom in a decentralized manner.

The method and apparatus 100 for measuring uniformity of a target medium described above may be implemented by a hardware component, a software component, and/or a combination thereof. For example, the devices and components described in the embodiments may be implemented using one or more general-purpose computers or special-purpose computers, such as a processor, a controller, an arithmetic logic unit (ALU), a digital signal processor, a microcomputer, a field programmable array (FPA), a programmable logic unit (PLU), a microprocessor, or any other device capable of executing and responding to instructions. The processing device may execute an operating system (OS) and one or more software applications executable on the operating system. The processing device may also access, store, manipulate, process, and generate data in response to execution of software. For convenience of understanding, the processing device is sometimes described as utilizing a single processing element, but a person having ordinary skill in the art will recognize that the processing device may include multiple processing elements and/or multiple types of processing elements. For example, the processing device may include multiple processors, or may include one processor and one controller. Further, another processing configuration such as a parallel processor is possible.

The software may include computer programs, code, instructions, or a combination thereof. The software may configure the processing device to operate as desired, or may independently or collectively instruct the processing device. The software and/or data may be permanently or temporarily embodied in any type of machine, component, physical device, virtual equipment, computer storage medium or device, or transmitted signal wave, for interpretation by the processing device or for providing instructions or data to the processing device. The software may also be distributed across networked computer systems to be stored or executed in a decentralized manner. The software and the data may be stored on one or more computer-readable recording media.

The embodiments of the present disclosure may be practiced in a distributed computing environment where certain tasks are performed by remote processing devices connected via a communication network. In the distributed computing environment, program modules may be located on both local and remote memory storage devices.

It will be understood that the particular order or hierarchy of steps in the disclosed processes are illustrative of exemplary approaches. It will be understood that the particular order or hierarchy of steps in the processes may be rearranged based on design preferences. In addition, some steps may be combined or omitted. The appended method claims present elements of various steps in a sample order and are not intended to be limited to the particular order or hierarchy presented.

Various aspects of the present disclosure are provided to enable those skilled in the art to practice the disclosure. Various modifications of the exemplary embodiments presented throughout the present disclosure will become apparent to those skilled in the art, and the concepts disclosed herein may be extended to other apparatus, devices, or processes. Accordingly, the appended claims are not intended to be limited to the various aspects of the present disclosure, but are intended to be given the full scope consistent with the language of the claims. All structural and functional equivalents of various components of the exemplary embodiments described throughout the present disclosure, or later known to those skilled in the art, are expressly incorporated herein by reference and are intended to be covered by the claims. Furthermore, no disclosure herein is intended for public exclusivity, regardless of whether such disclosure is expressly recited in the claims.

While the preferred embodiments of the present disclosure have been described with reference to the drawings as above, it should be understood that the foregoing embodiments are provided for illustration only and are not to be in any way construed as limiting the present disclosure, and that various modifications, changes, alterations, and equivalent embodiments can be made by those skilled in the art without departing from the spirit and scope of the disclosure. For example, even when the invention described herein is performed in a different order than described herein and/or the components of the described systems, structures, devices, circuits, etc. are combined or assembled in a different form than described herein or are substituted or replaced by other components or equivalents thereto, suitable results can be achieved.

Therefore, other implementations, other embodiments, and equivalents to the appended claims fall within the scope of the claims.

## Claims

1. An apparatus for measuring uniformity of a target medium, comprising:
a photothermal irradiator configured to irradiate a target medium with at least two types of irradiation light having different peak wavelengths, the irradiation light including a first irradiation light having a first peak wavelength and a first period, and a second irradiation light having a second peak wavelength and a second period; and
a speckle analyzer configured to obtain a speckle image - the speckle image including a first region varying in response to the first period, a second region varying in response to the second period, and a third region with relatively little variation - from the target medium irradiated with the irradiation light and to determine uniformity of the target medium based on the obtained speckle image.

2. The apparatus according to claim 1, wherein the photothermal irradiator is configured to simultaneously irradiate the target medium with the first irradiation light and the second irradiation light for at least a preset duration.

3. The apparatus according to claim 1, wherein the photothermal irradiator is configured to sequentially irradiate the target medium with the first irradiation light and the second irradiation light for at least a preset duration.

4. The apparatus according to claim 1, wherein the photothermal irradiator is configured to irradiate the same region of the target medium with the first irradiation light and the second irradiation light.

5. The apparatus according to claim 1, wherein the first period is different from the second period.

6. The apparatus according to claim 1, wherein the photothermal irradiator further comprises a memory configured to store peak wavelengths and periods of irradiation light to be emitted to the target medium, and substance information corresponding to the irradiation light.

7. The apparatus according to claim 1, wherein the speckle analyzer further comprises a memory configured to store peak wavelengths and periods of irradiation light reaching the target medium, and substance information corresponding to the irradiation light.

8. The apparatus according to claim 1, wherein the speckle analyzer is configured to obtain the number and/or the size of each of the first, second, and third regions, and to determine uniformity of the target medium based on the number and/or the size.

9. A method for measuring uniformity of a target medium, comprising:
irradiating, by a photothermal irradiator, a target medium with at least two types of irradiation light having different peak wavelengths, the irradiation light including a first irradiation light having a first peak wavelength and a first period, and a second irradiation light having a second peak wavelength and a second period;
obtaining, by a speckle analyzer, a speckle image from the target medium irradiated with the irradiation light, the speckle image including a first region varying in response to the first period, a second region varying in response to the second period, and a third region with little variation; and
determining, based on the obtained speckle image, uniformity of a substance corresponding to the third region.

10. The method according to claim 9, wherein the step of irradiating the target medium with the at least two types of irradiation light having different peak wavelengths comprises simultaneously irradiating the target medium with the first irradiation light and the second irradiation light for at least a preset duration.

11. The method according to claim 9, wherein the step of irradiating the target medium with the at least two types of irradiation light having different peak wavelengths comprises sequentially irradiating the target medium with the first irradiation light and the second irradiation light for at least a preset duration.

12. The method according to claim 9, wherein the step of irradiating the target medium with the at least two types of irradiation light having different peak wavelengths comprises irradiating the same region of the target medium with the first irradiation light and the second irradiation light.

13. The method according to claim 9, wherein the first period is different from the second period.

14. The method according to claim 9, wherein the step of irradiating the target medium with the at least two types of irradiation light having different peak wavelengths comprises reading, from a memory of the photothermal irradiator, peak wavelengths and periods of irradiation light to be emitted to the target medium, and substance information corresponding to the irradiation light.

15. The method according to claim 9, wherein the step of determining uniformity of the substance corresponding to the third region based on the obtained speckle image comprises reading, from a memory of the speckle analyzer, peak wavelengths and periods of irradiation light reaching the target medium, and substance information corresponding to the irradiation light.

16. The method according to claim 9, wherein the step of determining uniformity of the substance corresponding to the third region based on the obtained speckle image comprises:
obtaining the number and/or the size of each of the first, second, and third regions; and
determining uniformity of the target medium based on the number and/or the size.

17. An apparatus for measuring uniformity of a target medium, comprising,
a photothermal irradiator comprising a first light source configured to irradiate a target medium with irradiation light of a first peak wavelength at a first period, and a memory configured to store information about the target medium, information about the irradiation light emitted to the target medium, and substance information corresponding to the irradiation light; and
a speckle analyzer comprising a sensor configured to obtain a speckle image from the target medium irradiated with the irradiation light, the speckle image including a first region varying in response to the first period and a second region excluding the first region; a memory configured to store information about the target medium, information about irradiation light reaching the target medium, and substance information corresponding to the irradiation light; and a processor configured to determine uniformity of the target medium based on the first region, the information about the target medium, the information about the irradiation light, and the substance information corresponding to the irradiation light.

18. An apparatus for measuring uniformity of a target medium, comprising,
a photothermal irradiator configured to irradiate a target medium with a first irradiation light having a first peak wavelength and a first period, the target medium including a first substance and a second substance having different physical properties; and
a speckle analyzer configured to obtain a speckle image from the target medium irradiated with the irradiation beam, to analyze the obtained image, and to provide a regionally mapped representation of the substances contained in the target medium by regionally mapping non-uniformity of thermal equilibrium on the target medium irradiated with the first irradiation light due to different properties of the first substance and the second substance.

19. A method for measuring uniformity of a target medium, comprising:
irradiating, by a photothermal irradiator, a target medium with a first irradiation light having a first peak wavelength and a first period for a preset duration, the target medium including a first substance and a second substance having different physical properties;
terminating irradiation with the first irradiation light;
obtaining a plurality of successive speckle images from the target medium irradiated with the irradiation beam after terminating irradiation with the first irradiation light; and
analyzing the plurality of obtained successive speckle images to generate an image having a regionally mapped representation of the substances contained in the target medium by regionally mapping non-uniformity of thermal equilibrium on the target medium irradiated with the first irradiation light due to different properties of the first substance and the second substance.
